(19) Europäisches Patentamt
European Patent Office
Office européen des brevets

(11) **EP 3 494 507 B1**

(12) **EUROPÄISCHE PATENTSCHRIFT**

(45) Veröffentlichungstag und Bekanntmachung des Hinweises auf die Patenterteilung:
**01.07.2020 Patentblatt 2020/27**

(21) Anmeldenummer: **17749352.5**

(22) Anmeldetag: **01.08.2017**

(51) Int Cl.:
**G06F 21/62** *(2013.01)*      **H04L 9/08** *(2006.01)*

(86) Internationale Anmeldenummer:
**PCT/AT2017/060195**

(87) Internationale Veröffentlichungsnummer:
**WO 2018/023144 (08.02.2018 Gazette 2018/06)**

(54) **VERFAHREN ZUR PRÜFUNG DER VERFÜGBARKEIT UND INTEGRITÄT EINES VERTEILT GESPEICHERTEN DATENOBJEKTS**

METHOD FOR CHECKING THE AVAILABILITY AND INTEGRITY OF A DATA OBJECT STORED IN A DISTRIBUTED MANNER

PROCÉDÉ DE VÉRIFICATION DE LA DISPONIBILITÉ ET DE L'INTÉGRITÉ D'UN OBJET DE DONNÉES ENREGISTRÉ DE MANIÈRE RÉPARTIE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **04.08.2016 AT 507102016**

(43) Veröffentlichungstag der Anmeldung:
**12.06.2019 Patentblatt 2019/24**

(73) Patentinhaber: **AIT Austrian Institute of Technology GmbH**
**1210 Wien (AT)**

(72) Erfinder:
• LORÜNSER, Thomas
**1100 Wien (AT)**
• KRENN, Stephan
**2340 Mödling (AT)**

(74) Vertreter: **Wildhack & Jellinek**
**Patentanwälte**
**Landstraßer Hauptstraße 50**
**1030 Wien (AT)**

(56) Entgegenhaltungen:
WO-A1-98/47264       WO-A1-2011/157708
DE-B3-102009 030 019   US-A1- 2005 240 749
US-A1- 2008 060 085

**Beschreibung**

Die Erfindung betrifft ein Verfahren zur Prüfung der Verfügbarkeit und Integrität eines Datenobjekts, das auf einer Anzahl von über ein Netzwerk miteinander verbundenen Servern verteilt abgespeichert ist.

Aus dem Stand der Technik ist es bekannt, einzelne Daten verteilt abzuspeichern. Dabei besteht die vorteilhafte Möglichkeit, dass aus einem Datenobjekt einzelne, verteilt auf unterschiedlichen Servern abgespeicherte Fragmente bestehen, aus denen das ursprüngliche Datenobjekt zwar rekonstruierbar ist, deren Weitergabe an unbefugte Dritte jedoch diesen keinen nennenswerten Informationsgewinn über das Datenobjekt bringt. Im Stand der Technik sind unterschiedliche Methoden zur Fragmentierung bekannt, mit denen es möglich ist, Datenobjekte aufgrund einer vorgegebenen Anzahl von Fragmenten zu rekonstruieren. So besteht beispielsweise die Möglichkeit, ein Datenobjekt auf insgesamt 19 Fragmente aufzuteilen, von denen insgesamt 10 benötigt werden, um das ursprüngliche Datenobjekt wieder herzustellen.

WO 2011/157708 A1 offenbart das gesicherte Speichern eines Datensatzes in der Cloud. Der Datensatz wird vor der Abspeichern in der Cloud in mehrere Bestandteile partitioniert und die einzelnen Bestandteile des Datensatzes werden auf unterschiedlichen Servern in der Cloud gespeichert.

All diese Verfahren haben den Nachteil, dass eine einfache Prüfung, ob die einzelnen Fragmente verfügbar bzw. unversehrt sind, es erfordert, dass diejenige Stelle, die die Integrität und Verfügbarkeit prüft, auch Kenntnis vom Inhalt des Datenobjekt erlangt, und/oder dass die Fragmente vor dem Speichern weiter vorverarbeitet und um weitere Komponenten (z.B. MACs oder sogenannte Sentinels) ergänzt werden müssen, wodurch einerseits auf Seiten des Datenbesitzers bzw. des Auditors ein permanenter Status gehalten werden muss und andererseits die Gesamtmenge der zu speichernden Daten steigt. Insbesondere dann, wenn ein externes Audit der Daten vorgenommen werden soll, beispielsweise durch unabhängige Stellen, die die Verfügbarkeit und Integrität der Daten gewährleisten sollen, ist es nicht wünschenswert, dass auch der Inhalt der Datenobjekte zu der prüfenden Stelle (zum Auditor) gelangt. Aufgabe der Erfindung ist es daher, ein Verfahren zur Prüfung der Verfügbarkeit und Integrität eines verteilt abgespeicherten Datenobjekts zu erstellen, bei dem der Auditor keine Kenntnisse von denjenigen Daten erlangt, deren Verfügbarkeit und Integrität er untersuchen soll. Die Erfindung löst diese Aufgabe bei einem Verfahren der eingangs genannten Art mit den Merkmalen des Patentanspruchs 1.

Eine einfache Feststellung der Position korrumpierter Daten sieht vor, dass für den Fall, dass bei der Konsistenzprüfung die Inkonsistenz der übermittelten Prüfsummen festgestellt wird, untersucht wird, durch welche der Prüfsummen die Inkonsistenz verursacht wurde und das Fragment, von dem diese Prüfsumme stammt, als fehlerhaft festgestellt wird.

Ein vereinfachter schneller durchzuführender Test sieht vor, dass von der Auditoreinheit ein vorgegebener Teilbereich innerhalb der einzelnen Fragmente festgelegt wird, der zur Bildung der Prüfsumme der einzelnen Fragmente herangezogen wird.

Eine Erhöhung der Sicherheit, die der Auditoreinheit weitere Möglichkeiten nimmt, Kenntnis von den zu überprüfenden Daten zu erlangen, sieht vor, dass zur Bildung der einzelnen Prüfsummen jeweils zusätzlich zum Fragment und zur Zufallszahl eine Zufallsmaske m verwendet wird, wobei die einzelnen in den Servern verwendeten Zufallsmasken-Fragmente gemeinsam der Konsistenzprüfung genügen.

Um eine Kommunikation der Server untereinander während des Auditierungsvorgangs zu vermeiden, kann vorgesehen sein, dass die einzelnen Zufallsmasken-Fragmente vorab an die einzelnen Server verteilt werden und in einer vorgegebenen Reihenfolge verwendet werden. Die einzelnen Server brauchen bei dieser Vorgehensweise keine Kenntnisse über die jeweils anderen an der Auditierung beteiligten Server haben.

Darüber hinaus kann ebenfalls zum Zweck der Erhöhung der Sicherheit auch vorgesehen sein, dass die Server die Zufallsmaske m im Zusammenwirken erstellen, wobei keiner der einzelnen Server Kenntnis über die Zufallsmasken-Fragmente der anderen Server erlangt, wobei jeder Server Werte die anderen, insbesondere an jeden anderen, Server übermittelt und diese Werte für die Bildung der Zufallsmasken-Fragmente herangezogen werden. In diesem Fall kann das Zusammenwirken der einzelnen Server bei der Erstellung der Zufallsmasken ausgenutzt werden, um die Sicherheit der Auditierung zu erhöhen.

Eine numerisch besonders einfach durchzuführende Methode bei der Bestimmung der Prüfsumme sieht vor, dass für die Bildung der Prüfsumme das jeweilige Fragment in eine Anzahl von N Fragment-Datenwörtern unterteilt wird, wobei gegebenenfalls eine Zufallsmaske m verwendet wird, die eines oder mehrere Datenwörter umfasst, und dass das Fragment Datenwortweise gewichtet und akkumuliert werden, wobei die Prüfsummenbildungsvorschrift linear ist hinsichtlich jedes einzelnen Datenworts des Fragments sowie gegebenenfalls hinsichtlich der Zufallsmasken-Fragmente.

Insbesondere kann zu diesem Zweck vorgesehen sein, dass die Prüfsumme für den i-ten Server gemäß der folgenden Prüfsummenbildungsvorschrift gebildet wird:

$$p_i = P(f_i) = f_{i,1}*R + f_{i,2}*R^2 + \ldots [+ m_i]$$

- wobei R die an alle Server übermittelte Zufallszahl bezeichnet,
- wobei $m_i$ das Zufallsmasken-Fragment des jeweiligen Servers bezeichnet und gegebenenfalls bei der Bildung der Prüfsumme berücksichtigt wird,
- $f_{i,j}$ das j-te Datenwort des im jeweiligen Server abgespeicherten Fragments bezeichnet, und
- wobei insbesondere das Ergebnis der Prüfsumme einer Modulo-Operation mit einem vorgegebenen Wert unterzogen wird.

Eine bevorzugte einfache Art der Fragmentierung von Datenobjekten sieht vor, dass die Fragmentierung des Datenobjekts vorgenommen wird, indem die vorgegebene Fragmentierungsvorschrift auf jedes Datenwort des Datenobjekts d separat angewendet wird, wobei für jedes Datenwort jeweils n Fragment-Datenwörter erstellt werden und diese den Fragmenten zugeordnet werden,

- dass die Fragmentierungsvorschrift invertierbar ist und eine Rekonstruktionsvorschrift vorgegeben wird, wobei für zwei beliebige Datenwörter der folgende Zusammenhang gilt:

$$F^{-1}(F(d_1)+F(d_2)) = d_1+d_2.$$

Um eine Rekonstruktion von Dateninhalten aus einem Fragment zu vermeiden, kann vorgesehen sein, dass die Fragmentierungsvorschrift für dasselbe Datenobjekt abhängig von Zufallswerten jeweils unterschiedliche Fragment-Datenwörter liefert, wobei bei Anwendung der Rekonstruktionsvorschrift auf die Fragment-Datenwörter jeweils die Datenwörter des Datenobjekts erhalten werden.

Eine einfache Rekonstruktion des Datenobjekts aus den Fragmenten sieht vor, dass zur Rekonstruktion des Datenobjekts aus den Fragmenten jeweils die einzelnen Fragment-Datenwörter, an den Client übertragen werden, wobei diejenigen Fragment-Datenwörter, die sich jeweils an derselben Position bezogen auf das jeweilige Fragment befinden und/oder einander zugeordnet sind, jeweils einer Rekonstruktionsvorschrift unterzogen werden.

Eine Überprüfung der Verfügbarkeit und Integrität der Daten, die eine volle Rekonstruktion erfordert, sieht vor, dass die einzelnen von den Servern erhaltenen Prüfsummen wie Fragment-Datenwörter der Rekonstruktionsvorschrift unterzogen werden und die Verfügbarkeit und Integrität der Daten festgestellt wird, wenn auf Grundlage der Prüfsummen erfolgte Rekonstruktionen von jeweils m Fragmenten jeweils dasselbe Ergebnis liefern.

Eine besonders einfache und numerisch vorteilhafte Ausführungsform der Erfindung sieht vor, dass

- bei Vorliegen von einer Anzahl von n Servern ein vorgegebener Polynomgrad q von höchstens n-2 vorgegeben wird,
- für jeden der Server jeweils ein Index i vorgegeben wird, wobei die Indizes der einzelnen Server untereinander verschieden sind
- bei der Fragmentierungsvorschrift die Fragment-Datenwörter derart gebildet werden,

  - dass ein Polynom vom vorgegebenen Polynomgrad q gebildet wird, das an einer vorgegebenen Stützstelle, insbesondere an der Stelle 0, den Wert des zu fragmentierenden Datenworts des Datenobjekts aufweist, wobei insbesondere das Polynom im übrigen nach Zufallskriterien ausgewählt wird ODER alle Koeffizienten des Polynoms durch Datenworte des zu fragmentierenden Datenobjekts gegeben sind, und
  - dass die Datenwörter der Fragmente durch Auswertung des Polynoms an derjenigen Stützstelle gebildet werden, die dem Index i des jeweiligen Servers entspricht, an den das Fragment übermittelt wird,

- bei der Prüfsummenbildung die einzelnen fragmentierten Datenwörter gewichtet addiert werden, sodass die Prüfsumme linear von den einzelnen Datenwörtern der Fragmente abhängt, und
- bei der Konsistenzprüfung untersucht wird, insbesondere mittels Interpolation, ob ein Polynom vom vorgegebenen Polynomgrad q gebildet werden kann, wenn es bei den jeweiligen Stützstellen, die den Indizes der Server entsprechen, die vom betreffenden Server übermittelten Prüfsummen aufweisen soll.

Zur Bildung von Zufallsmasken kann in diesem Zusammenhang vorteilhaft vorgesehen sein, dass bei der Erstellung der Zufallsmasken

- von jedem Server ein zufälliges Polynom vom vorgegebenen Polynomgrad q erstellt wird und das Polynom an den Stellen, die seinem Index und den Indizes der übrigen Server befinden, ausgewertet wird,

- jeder Server den Wert den er bei Auswertung des Polynoms an seinem Indexwert erhalten hat abspeichert und die anderen Werte an die jeweiligen Server überträgt, deren Index dem Index entspricht, an dem das Polynom ausgewertet wurde,
- die Server den bei ihnen abgespeicherten Wert sowie die ihnen von den übrigen Servern übermittelten Werte akkumulieren, insbesondere addieren, und derart die Zufallsmasken-Fragmente ermittelt wird.

Numerisch besonders vorteilhaft ist eine Auswertung, wenn im Rahmen aller vorgenommenen Rechenoperationen, insbesondere bei der Fragmentierungsvorschrift, der Prüfsummenbildung, der Konsistenzprüfung, und gegebenenfalls der Erstellung der Zufallsmasken,

a) Datenwörter aus einem endlichen Körper, insbesondere einem Restklassenkörper oder einem Körper mit $2^a$ Elementen, wobei a eine ganze Zahl darstellt, entnommen werden, und
b) für die Bildung der Summe oder des Produkts oder des multiplikativen oder additiven Inversen zweier Datenwörter die im jeweiligen Körper geltenden Vorschriften für die Summen- oder Produktbildung oder Invertierung herangezogen werden.

Mehrere bevorzugte Ausführungsformen der Erfindung sind anhand der folgenden Zeichnungsfiguren näher dargestellt. **Fig. 1** zeigt ein einfaches Computernetzwerk zur Durchführung eines erfindungsgemäßen Verfahrens. **Fig. 2** zeigt ein die Fragmentierung und Verteilung der Fragmente auf die Server bei einem Ausführungsbeispiel. **Fig. 3** zeigt ein Ausführungsbeispiel des Auditierens der verteilt abgespeicherten Daten. **Fig. 4** zeigt ein mögliches Ausführungsbeispiel zur Erstellung von Zufallsmasken.

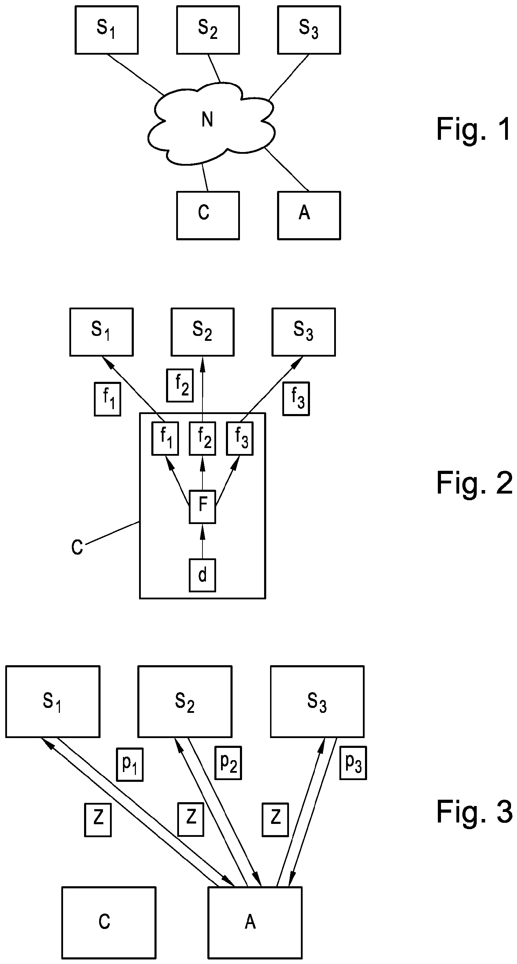

**Fig. 1** zeigt ein einfaches Computernetzwerk mit einem Client C sowie einer Mehrzahl an Servern $S_1$, $S_2$, $S_3$ sowie eine Auditierungseinheit A. Der Client C, die Auditierungseinheit A sowie die einzelnen Server $S_1$, $S_2$, $S_3$ sind über ein Netzwerk N miteinander verbunden. Zur verteilten Abspeicherung eines auf dem Client C befindlichen Datenobjekts d auf den Servern $S_1$, $S_2$, $S_3$ werden die folgenden Schritte vorgenommen:
Das Datenobjekt d wird auf dem Client C fragmentiert, wobei eine Anzahl von n = 3 Fragmenten $f_1$, ..., $f_n$ erstellt wird. Die Anzahl der erstellten Fragmente $f_1$, ..., $f_n$ entspricht dabei der Anzahl der verwendeten Server $S_1$, ..., $S_n$. Je nachdem wie viele Server $S_1$, ..., $S_n$ verwendet werden sollen, wird auch eine unterschiedliche Anzahl von Fragmenten $f_1$, ..., $f_n$ erstellt. Anschließend werden die Fragmente $f_1$, ..., $f_n$ einzeln auf die Server $S_1$, ..., $S_n$ übertragen.

Dabei wird das Fragment $f_1$, wie in **Fig. 2** dargestellt, an den Server $S_1$ das Fragment $f_2$ an den Server $S_2$ und das Fragment $f_3$ an den Server $S_3$ übertragen. Zur Erstellung der Fragmente $f_1$, ..., $f_n$ wird eine Fragmentierungsvorschrift F vorgegeben, mit der für ein Datenobjekt eine Anzahl von n = 3 Fragmenten mit derselben Datenwortanzahl von N=2 Datenwörtern erstellt werden.

Zu beachten ist, dass die Fragmentierungsvorschrift F für dasselbe Datenobjekt unterschiedliche Fragmente $f_1$, ..., $f_n$ liefern kann wobei im Rahmen der Fragmentierungsvorschrift Zufallswerte in die Fragmente einfließen, die die in einem einzelnen Fragment enthaltenen Daten unbrauchbar machen; die Kenntnis der in einer festlegbaren Anzahl von Fragmenten enthaltenen Informationen erlaubt hingegen die Rekonstruktion des Datenobjekts aus den Fragmenten.

Die Rekonstruktionsvorschrift $F^{-1}$ der Fragmentierungsvorschrift F erzeugt auf Basis der Fragmente das ursprüngliche Datenobjekt. Die Rekonstruktionsvorschrift hat die Eigenschaft, dass ihre Anwendung auf die Summe zweier fragmentierter Datenwörter die Summe der beiden unfragmentierten Datenwörter entspricht.

$$F^{-1}(F(d_1)+F(d_2)) = d_1+d_2$$

Für alle Ausführungsbeispiele wird für die einfachere Darstellung der Vorgehensweise als Datentyp für die einzelnen Datenwörter der Restklassenkörper $Z_{13}$ von 13 Zahlen verwendet. Die Datenwörter können dabei Werte von 0 bis 12 annehmen. Die Operationen innerhalb dieses Restklassenkörpers entsprechen den Operationen für ganze Zahlen, wobei jeweils nach Durchführung der Addition oder Multiplikation jeweils eine Modulo-Operation vorgenommen und die Zahl in den Zahlenbereich zwischen 0 und 12 transformiert wird. In diesem Körper steht wie bei allen Körpern für jede Zahl x ein multiplikatives Inverses $x^{-1}$ zur Verfügung, das die Eigenschaft hat, dass $x * x^{-1} = 1$.

Darüber hinaus können Addition und Multiplikation auch derart festgelegt werden, dass Körpereigenschaften auch für Mengen mit $P^a$ Elementen bestehen, wobei P eine Primzahl und a eine beliebige natürliche Zahl ist. Unter Ausnutzung dieses Umstands kann anstelle eines Restklassenkörpers auch ein solcher Körper mit P=2 und beispielsweise a=16 für die Repräsentation der Datenwörter herangezogen werden, dh ein Datenwort kann jeweils eindeutig und ohne Verschwendung von Speicherplatz durch eine binärcodierte Zahl dargestellt werden, was in Bezug auf die Ausnutzung von Speicherplatz vorteilhaft ist.

Aufgrund der hierfür erforderlichen komplexeren Durchführung der im Körper festgelegten Addition und Multiplikation wird für das hier dargestellte Rechenbeispiel aus Gründen der Anschaulichkeit der Körper $Z_{13}$ gewählt. Die Addition und Multiplikation erfolgt jeweils wie bei den natürlichen oder ganzen Zahlen, wobei anschließend die Rechenoperation Modulo 13 ausgeführt wird.

Im vorliegenden Fall wird ein sehr einfaches Beispiel gezeigt, in der das Datenobjekt d und die einzelnen Fragmente $f_1$, ..., $f_n$ erstellt werden. Die Fragmente $f_1$, ..., $f_3$ werden derart redundant erstellt, dass eine Anzahl von m = 2<n Fragmenten zur Rekonstruktion des Datenobjekts ausreicht. Im vorliegenden Fall umfasst das Datenobjekt d zwei Datenwörter $d_1$ = 4 und $d_2$ = 9. Für jedes einzelne Datenwort wählt der Client jeweils ein zufälliges Polynom vom Polynomgrad q = m-1 = 1, dessen konstanter Term dem jeweiligen Datenwort $d_1$, $d_2$ des Datenobjekts d entspricht und dessen Steigung $r_1$, $r_2$ einen für alle Server gemeinsam verwendeten Zufallswert darstellt. Mit der Fragmentierungsvorschrift erhält man für jedes Datenwort des Datenobjekts jeweils ein Polynom $F_1(x)$, $F_2(x)$, das beispielsweise durch zufällige Auswahl der Steigungen $r_1$ = 8, $r_2$ = 6 wie folgt festgelegt werden kann:

$$F_1(x) = 8x+4 = r_1\, x + d_1 \qquad\qquad F_2(x) = 6x+9 = r_2\, x + d_2$$

Im Zuge der Fragmentierung wird jedem der Server $S_1$, $S_2$, $S_3$ jeweils ein Index zugewiesen. Die Indizes der Server $S_1$, $S_2$, $S_3$ werden als ganze Zahlen (1, 2, 3) vorgegeben. Die so gebildeten Polynome werden jeweils an denjenigen ganzzahligen Stützstellen ausgewertet, die den Indizes des jeweiligen Servers entsprechen.

Im Folgenden wird die Bestimmung des Fragments $f_1$, ..., $f_n$ näher dargestellt, das nach seiner Erstellung an den ersten Server $S_1$ übertragen wird.

Der erste Server $S_1$ erhält im vorliegenden Ausführungsbeispiel den Index 1. Die Fragment-Datenwörter $f_{1,1}$, $f_{1,2}$ des an den ersten Server $S_1$ zu übermittelten Fragments $f_1$ werden gemäß

$$f_{1,1} = F_1(1) = 8{*}1{+}4 = 12 \qquad\qquad f_{1,2} = F_2(1) = 6{*}1{+}9 = 15 \ (\text{mod } 13) = 2$$

ermittelt. An den ersten Server $S_1$ wird somit ein Fragment $f_1$ übertragen, das Fragment-Datenwörter [12,2] enthält.

Der zweite Server $S_2$ erhält im vorliegenden Ausführungsbeispiel den Index 2. Die Fragment-Datenwörter $f_{2,1}$, $f_{2,2}$ des an den zweiten Server $S_2$ zu übermittelten Fragments $f_2$ werden gemäß

$$f_{2,1} = F_1(2) = 8{*}2{+}4 = 20 \ (\text{Mod } 13) = 7 \qquad f_{2,2} = F_2(2) = 8$$

ermittelt. An den zweiten Server $S_2$ wird somit ein Fragment $f_2$ übertragen, das Fragment-Datenwörter [7,8] enthält.

Der dritte Server $S_3$ erhält im vorliegenden Ausführungsbeispiel den Index 3. Die Fragment-Datenwörter $f_{3,1}$, $f_{3,2}$ des an den dritten Server $S_3$ zu übermittelten Fragments $f_3$ werden gemäß

$$f_{3,1} = F_1(3) = 2 \qquad\qquad f_{3,2} = F_2(3) = 1$$

ermittelt. An den dritten Server $S_3$ wird somit ein Fragment $f_3$ übertragen, das die Fragment-Datenwörter [2,1] enthält.

Die an die einzelnen Server $S_1$, $S_2$, $S_3$ übertragenen Fragmente $f_1$, $f_2$, $f_3$ werden in den Servern abgespeichert und für die weitere Verarbeitung zur Verfügung gehalten. In einem weiteren in **Fig. 3** dargestellten Schritt übermittelt eine Auditoreinheit A eine von ihm erstellte Zufallszahl R an jedem der Server $S_1$, $S_2$, $S_3$. Jeder Server $S_1$, $S_2$, $S_3$ ermittelt über das bei ihm vorliegende Fragment $f_1$, $f_2$, $f_3$ Datenwortweise eine Prüfsumme $p_1$, $p_2$, $p_3$ aufgrund der im folgenden dargestellten Prüfsummenbildungsvorschrift, wobei das Ergebnis wie auch bei der Fragmentierung der Operation (mod 13) unterzogen wird:

$$p_i = P(f_i) = f_{i,1}{*}R + f_{i,2}{*}R^2$$

Zur Veranschaulichung nehmen wir im folgenden Beispiel an, dass die Auditoreneinheit A die Zufallszahl R=4 gewählt hat.

Im ersten Server $S_1$, in dem das Datenfragment [12, 2] zur Verfügung steht, ergibt

$$p_1 = 12*4+2*16 = 80 \ (\text{Mod } 13) = 2.$$

Im zweiten Server $S_2$, in dem das Datenfragment [7, 8] zur Verfügung steht, ergibt

$$p_2 = 7*4+8*16 = 156 \ (\text{Mod } 13) = 0$$

Im dritten Server $S_3$, in dem das Datenfragment [2, 1] zur Verfügung steht, ergibt

$$p_3 = 2*4+1*16 = 24 \ (\text{Mod } 13) = 11$$

Die einzelnen Prüfsummen $p_1 = 2$, $p_2 = 0$, $p_3 = 11$ werden an die Auditiereinheit A übertragen. Bei der Konsistenzüberprüfung wird von der Auditierungseinheit A überprüft, ob Punkte, deren y-Koordinate der Prüfsumme entspricht und deren x-Koordinate dem Index des jeweiligen die Prüfsumme erstellenden Servers $S_1$, $S_2$, $S_3$ entspricht, auf einem Polynom von Grad q=1 liegen. Im vorliegenden Fall liegen die einzelnen Punkte auf einem Polynom g(x) = 4-2x. Für die erste $p_1$ Prüfsumme ergibt sich g(1) = 4-2*1 = 2 = $p_1$. Für die zweite Prüfsumme $p_2$ ergibt sich g(2) = 4-2*2 = 0 = $p_2$. Für die dritte Prüfsumme ergibt sich g(3) = 4-2x = -2 (Mod 13) = $p_3$. Da sämtliche der angegebenen Werte auf einem Polynom von Grad q=1 liegen, kann eine Konsistenz festgestellt werden.

Für das Auffinden solcher Polynome können unterschiedliche Berechnungsvorschriften verwendet werden. Eine bevorzugte Art des Auffindens von Polynomen aufgrund der in den Stützstellen vorgegebenen Werte benötigt von den Körpereigenschaften des betreffenden Datenworts die Existenz und die Berechnung eines multiplikativen Inversen. Ein solches multiplikatives Inverses ist in einem Körper notwendigerweise vorhanden.

Für die folgenden Überlegungen wird vorausgesetzt, dass zur Sicherstellung der Privatheit der gespeicherten Daten höchstens m-1 Fragmente oder Server korrumpiert sind. Andernfalls könnten korrupte Server andernfalls gemeinsam ihre m Fragmente zur Rekonstruktion der Daten verwenden. Bei den in der Literatur empfohlenen Wahlen für n (z.B. n=2m-1, n=3m-2) folgt dann unmittelbar, dass mindestens m unkorrumpierte Fragmente übrig bleiben.

Aus der Konsistenz der auf den verschiedenen Servern gespeicherten Fragmenten folgt nun für den vorstehend beschriebenen Fall unmittelbar die Integrität der gespeicherten Daten, dh. die Fragmente ergeben nach Rekonstruktion tatsächlich die ursprünglich gespeicherten Daten: Wenn nämlich die m unveränderten Fragmente zu den ursprünglichen Daten rekonstruiert würden, und alle anderen Fragmente mit diesen konsistent sind, ergibt notwendigerweise jede Rekonstruktion von beliebigen m Fragmenten die ursprünglichen Daten.

Wird eines der Fragmente $f_{2,1}$ beispielsweise aufgrund einer Beschädigung des Datenträgers des zweiten Servers $S_2$ verändert und erhält es beispielsweise den Wert 10 anstelle von 7, so ergibt sich die Prüfsumme $p_2$ für den zweiten Server $S_2$ entsprechend zu

$$p_2 = 10*4+8*16 = 168 \ (\text{Mod } 13) = 12.$$

Da nach der Auswertung die Punkte [1, $p_1$], [2, $p_2$] [3, $p_3$] nicht mehr die Konsistenzbedingung erfüllen und nicht mehr auf einem Polynom vom Grad q=1 liegen wird bei der Konsistenzprüfung die Inkonsistenz der übermittelten Prüfsummen $p_1$, ..., $p_n$ festgestellt.

Werden m+2 oder mehr Server verwendet, so kann auch festgestellt werden, welches der untersuchten Fragmente beschädigt bzw verändert ist. Sofern weitere Prüfsummen $p_4$, ... weiterer Server zur Verfügung stehen, beispielsweise ein vierter nicht dargestellter Server mit Index 4 ermittelt richtigerweise die Prüfsumme $p_4 = 9$, kann festgestellt werden, dass bis auf den Punkt [2, $p_2$] alle anderen Punkte [1, $p_1$] [3, $p_3$] [4, $p_4$] auf einem Polynom von Grad q=1, nämlich auf dem Polynom g(x) = 4-2x liegen. Das Fragment $f_2$ des zweiten Servers kann als fehlerhaft festgestellt werden.

Bei einer zweiten bevorzugten Ausführungsform der Erfindung, die im übrigen mit der ersten Ausführungsform der Erfindung identisch ist, kann zur Bildung der einzelnen Prüfsummen $p_1$, $p_2$, $p_3$ jeweils zusätzlich zum Fragment $f_1$, $f_2$, $f_3$ und zur Zufallszahl R eine Zufallsmaske m verwendet werden, wobei jeder der einzelnen Server $S_1$, $S_2$, $S_3$ jeweils über ein separates Zufallsmasken-Fragment $m_1$, ..., $m_3$ verfügt. Die einzelnen den Servern zugeordneten Zufallsmasken-Fragmente genügen untereinander ebenfalls den Konsistenzbedingungen, dh die Punkte [1, $m_1$] [2, $m_2$] [3, $m_3$] liegen im vorliegenden Ausführungsbeispiel auf einem Polynom vom Grad q=1. Bei dieser Ausführungsform besteht für den Auditor keine Möglichkeit, Informationen über das Datenobjekt zu erhalten.

Die Zufallsmasken-Fragmente $m_1$, $m_2$, $m_3$ werden bei der Bildung der Prüfsumme $p_1$, $p_2$, $p_3$ wie folgt berücksichtigt: Bei jeder Anfrage werden andere Zufallsmasken-Fragmente $m_1$, $m_2$, $m_3$ verwendet, die jeweils gemeinsam die Konsistenzbedingung erfüllen. Die Zufallsmaske kann eines oder mehrere Datenwörter umfassen.

Eine Möglichkeit, die Zufallsmaske m vorzugeben ist es, von einer externen vertrauenswürdigen Quelle oder vom Client C eine Vielzahl von die Konsistenzbedingung erfüllenden Zufallsmasken-Fragmente $m_1$, $m_2$, $m_3$ für jeden der Server $S_1$, $S_2$, $S_3$ vorab, quasi auf Vorrat, zu erstellen und diese in einer vorgegebenen Reihenfolge zu verwenden. Dies setzt natürlich voraus, dass die Zufallsmasken-Fragmente $m_1$, $m_2$, $m_3$ jeweils vom selben Serververbund verwendet werden.

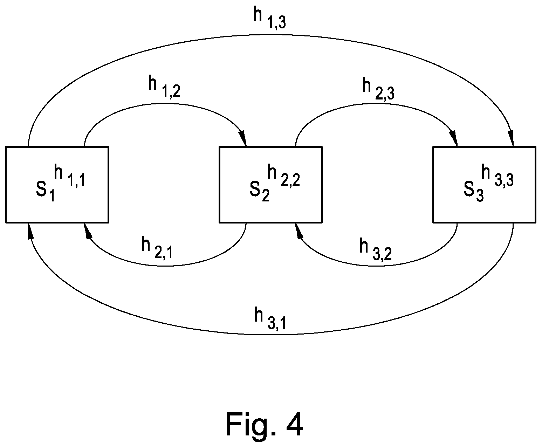

Eine alternative im Folgenden beschriebene in **Fig. 4** dargestellte Methode ermöglicht es, dass die Server $S_1$, $S_2$, $S_3$ die Zufallsmaske m im Zusammenwirken erstellen, wobei keiner der einzelnen Server $S_1$, $S_2$, $S_3$ Kenntnis über die Zufallsmasken-Fragmente $m_1$, $m_2$, $m_3$ der anderen Server $S_1$, $S_2$, $S_3$ erlangt. Für jeden Fall der Auditierung ist den beteiligten Servern $S_1$, $S_2$, $S_3$ jeweils nur bekannt, auf welchen Servern $S_1$, $S_2$, $S_3$ die übrigen Fragmente $f_1$, $f_2$, $f_3$ abgespeichert sind. Diese Vorgehensweise hat den Vorteil, dass für jede Auditierung Zufallsmasken erzeugt werden und die Anzahl der Auditierungen vorab nicht bekannt zu sein braucht.

Jeder der Server $S_1$, $S_2$, $S_3$ ermittelt zur Erstellung der Zufallsmaske ein zufälliges Polynom $g_1(x)$, $g_2(x)$, $g_3(x)$ mit dem auch für die Fragmentierung, Prüfsummenbildung und Konsistenzprüfung verwendeten Polynomgrad q=1 und übermittelt an die übrigen Server $S_j$ mit dem Index j die Werte des Polynoms $g_i(j)$. Im Folgenden wird dies anhand eines Beispiels näher dargestellt:

Der erste Server $S_1$ erstellt das zufällige Polynom $g_1(x) = 2x+8$. Er wertet das Polynom an den Stellen aus, die seinem Index (1) bzw den Indizes (2, 3) der übrigen Server $S_2$, $S_3$ befinden.

$$h_{1,1} = g_1(1) = 10; \qquad h_{1,2} = g_1(2) = 12; \qquad h_{1,3} = g_1(3) = 14 \ (\text{mod } 13) = 1.$$

Der erste Server $S_1$ speichert den Wert $h_{1,1}$, den er bei Auswertung des Polynoms an seinem Index (1) erhält und überträgt den Wert $h_{1,2}$ an den zweiten Server $S_2$, den Wert $h_{1,3}$ an den dritten Server $S_3$.

Der zweite Server $S_2$ erstellt das zufällige Polynom $g_2(x) = 3x+1$. Er wertet das Polynom an den Stellen aus, die seinem Index (2) bzw den Indizes (1, 3) der übrigen Server $S_1$, $S_3$ befinden.

$$h_{2,1} = g_2(1) = 4; \qquad h_{2,2} = g_2(2) = 7; \qquad h_{2,3} = g_2(3) = 10.$$

Der zweite Server $S_2$ speichert den Wert $h_{2,2}$, den er bei Auswertung des Polynoms an seinem Index (2) erhält und überträgt den Wert $h_{2,1}$ an den ersten Server $S_1$, den Wert $h_{2,3}$ an den dritten Server $S_3$.

Der dritte Server $S_3$ erstellt das zufällige Polynom $g_3(x) = 7x+7$. Er wertet das Polynom an den Stellen aus, die seinem Index (3) bzw den Indizes (1, 2) der übrigen Server $S_1$, $S_2$ befinden.

$$h_{3,1} = g_3(1) = 14 \ (\text{mod } 13) = 1; \qquad h_{3,2} = g_3(2) = 21 \ (\text{mod } 13) = 8;$$

$$h_{3,3} = g_3(3) = 28 \ (\text{mod } 13) = 2.$$

Der dritte Server $S_3$ speichert den Wert $h_{3,3}$, den er bei Auswertung des Polynoms an seinem Index (3) erhält und überträgt den Wert $h_{3,1}$ an den ersten Server $S_1$, den Wert $h_{3,2}$ an den zweiten Server $S_1$.

In einem weiteren Schritt addieren alle Server $S_1$, $S_2$, $S_3$ den bei ihnen abgespeicherten Wert sowie die ihnen von den übrigen Servern $S_1$, $S_2$, $S_3$ übermittelten Werte, gegebenenfalls führen die Server die Modulo-Operation durch. Die Werte $m_1$, $m_2$, $m_3$ der Zufallsmasken ergeben sich entsprechend zu:

$$m_1 = h_{1,1} + h_{2,1} + h_{3,1} = 10+4+1 \ (\text{mod } 13) = 2;$$

$$m_2 = h_{1,2} + h_{2,2} + h_{3,2} = 12+7+8 \ (\text{mod } 13) = 1;$$

$$m_3 = h_{1,3} + h_{2,3} + h_{3,3} = 1+10+2 \ (\text{mod } 13) = 0.$$

Bei der Berechnung der Prüfsummen $p_1$, $p_2$, $p_3$ werden die Zufallsmasken-Fragmente wie folgt berücksichtigt:

$$p_i = P(f_i) = f_{i,1}*R + f_{i,2}*R^2 + m_i$$

Im ersten Server $S_1$, in dem das Datenfragment [12, 2] zur Verfügung steht, ergibt

$$p_1 = 12*4 + 2*16 + 2 = 82 \ (\text{Mod } 13) = 4.$$

Im zweiten Server $S_2$, in dem das Datenfragment [7, 8] zur Verfügung steht, ergibt

$$p_2 = 7*4 + 8*16 + 1 = 157 \ (\text{Mod } 13) = 1$$

Im dritten Server $S_3$, in dem das Datenfragment [2, 1] zur Verfügung steht, ergibt

$$p_3 = 2*4+1*16 + 0 = 24 \ (\text{Mod } 13) = 11$$

Die einzelnen Prüfsummen $p_1 = 4$, $p_2 = 1$, $p_3 = 11$ werden an die Auditiereinheit A übertragen. Bei der Konsistenzüberprüfung wird von der Auditierungseinheit A überprüft, ob Punkte, deren y-Koordinate der Prüfsumme entspricht und deren x-Koordinate dem Index des jeweiligen die Prüfsumme $p_1$, $p_2$, $p_3$ erstellenden Servers $S_1$, $S_2$, $S_3$ entspricht, auf einem Polynom von Grad q=1 liegen. Im vorliegenden Fall liegen die einzelnen Punkte auf einem Polynom g(x) = 7-3x. Für die erste Prüfsumme $p_1$ ergibt sich g(1) = 7-3*1 = 2 = $p_1$. Für die zweite Prüfsumme $p_2$ ergibt sich g(2) = 7-3*2 = 1 = $p_2$. Für die dritte Prüfsumme $p_3$ ergibt sich g(3) = 7-3*3 = -2 (Mod 13) = 11 = $p_3$. Da sämtliche der angegebenen Werte auf einem Polynom von Grad q=1 liegen, kann eine Konsistenz und damit auch die Verfügbarkeit und Integrität der Daten festgestellt werden.

Zur Rekonstruktion des Datenobjekts d aus den Fragmenten $f_1$, ..., $f_n$ werden jeweils die einzelnen Fragment-Datenwörter $f_{1,1}$, ..., $f_{n,N}$ der Fragmente $f_1$, ..., $f_n$, die sich jeweils an derselben Position bezogen auf das jeweilige Fragment $f_1$, ..., $f_n$ befinden und/oder einander zugeordnet sind an den Client C oder an einen anderen berechtigten Rechner übertragen und Datenwortweise rekonstruiert.

Für die Rekonstruktion des ersten Datenworts $d_1$ wird nach einem Polynom $k_1$ von Grad q=1 gesucht, das an den Stützstellen, die den Indizes (1, 2, 3) der Server entsprechen, die Werte der ersten Fragment-Datenwörter $f_{1,1}$, $f_{2,1}$, $f_{3,1}$ der Fragmente $f_1$, $f_2$, $f_3$ aufweist. Analog wird für die Rekonstruktion des zweiten Datenworts $d_2$ des Datenobjekts nach einem Polynom $k_2$ von Grad q=1 gesucht, das an den Stützstellen, die den Indizes (1, 2, 3) der Server entsprechen, die Werte der ersten Fragment-Datenwörter $f_{1,2}$, $f_{2,2}$, $f_{3,2}$ der Fragmente $f_1$, $f_2$, $f_3$ aufweist:

$$k_1(1) = 12; \ k_1(2) = 7; \ k_1(3) = 2$$

$$k_2(1) = 2; \ k_2(2) = 8; \ k_2(3) = 1$$

Solche Polynome können durch einfache Arithmetische Operationen gefunden werden, da in einem Körper jedenfalls ein multiplikatives Inverses zur Verfügung steht:

$$k_1(x) = 4 - 5x \ (\text{mod } 13); \qquad k_2(x) = 9 + 6x \ (\text{mod } 13)$$

Wertet man diese Polynome $k_1$, $k_2$ jeweils an der Stelle 0 aus, so erhält man die ursprünglichen Datenwörter des Datenobjekts

$$d_1 = k_1(0) = 4; \qquad d_2 = k_2(0) = 9.$$

Bei allen Ausführungsformen der Erfindung ist es selbstverständlich auch möglich, Polynome von anderen Polynomgraden q zu verwenden, wobei jeweils für die Fragmentierung, die Prüfsummenbildung, die Konsistenzprüfung und gegebenenfalls die Bildung der Zufallsmasken jeweils derselbe Polynomgrad q verwendet wird. Darüber hinaus ist zu beachten, dass der Polynomgrad q eine Mindestanzahl $m > q$ der Server $S_1$, $S_2$, $S_3$ bestimmt, auf denen integere Daten zur Verfügung stehen müssen, damit eine Rekonstruktion möglich ist. Die Verwendung einer größeren Anzahl von n Servern $S_1$, $S_2$, $S_3$ sowie der Anzahl m der für die Rekonstruktion erforderlichen Fragmente erhöht zusätzlich die Sicherheit, insbesondere kann $n=2m-1$ oder $n=3m-2$ gesetzt werden.

Sofern längere Fragmente vorliegen, bei denen die Bildung von Prüfsummen einen größeren Ressourcenbedarf darstellt ist es auch möglich, dass lediglich ein von der Auditoreinheit A ein bei jedem Auditieren zufällig vorgegebener Teilbereich innerhalb der einzelnen Fragmente $f_1$, ..., $f_n$ festgelegt wird, der zur Bildung der Prüfsummen $p_1$, ..., $p_n$ für die einzelnen Fragmente $f_1$, ..., $f_n$ herangezogen wird.

**Patentansprüche**

1. Verfahren zur Prüfung der Verfügbarkeit und Integrität eines auf einer Anzahl von über ein Netzwerk miteinander verbundenen Servern ($S_1$, ..., $S_n$) verteilt abgespeicherten Datenobjekts (d) mit einer Anzahl N von Datenwörtern ($d_1$, ..., $d_N$),

   - wobei eine Fragmentierungsvorschrift vorgegeben wird, mit der für ein Datenobjekt (d) eine Anzahl n von Fragmenten, mit insbesondere derselben Datenwortanzahl, erstellt werden, wobei die Fragmente ($f_1$, ..., $f_n$) derart redundant erstellt werden, dass eine Anzahl $m < n$ von Fragmenten ($f_1$, ..., $f_n$) zur Rekonstruktion des Datenobjekts (d) ausreicht,
   - dass eine Konsistenzprüfung zur Verfügung gestellt wird, die bei Vorliegen von einer Anzahl von mehr als m, insbesondere von n, insbesondere nach der Fragmentierungsvorschrift (f) hergestellten, Fragmenten ($f_1$, ..., $f_n$) eine Prüfung dahingehend vornimmt, ob diese Fragmente ($f_1$, ..., $f_n$) untereinander konsistent sind und/oder vom selben Datenobjekt (d) herrühren,
   - wobei eine Prüfsummenbildungsvorschrift zur Bildung der Prüfsumme ($p_1$, ..., $p_n$), vorgegeben wird, mit der ausgehend von einem Fragment ($f_1$, ..., $f_n$) eine Prüfsumme ($p_1$, ..., $p_n$) erstellt wird,
   - wobei die Fragmentierungsvorschrift, die Konsistenzprüfung und die Prüfsummenbildungsvorschrift derart aufeinander abgestimmt sind, dass

      - einzelne mit der Fragmentierungsvorschrift aus einem Datenobjekt (d) erstellte Fragmente ($f_1$, ..., $f_n$) konsistent im Sinne der Konsistenzprüfung (K) sind,
      - mittels der Prüfsummenbildungsvorschrift gebildete Prüfsummen ($p_1$, ..., $p_n$), die von Fragmenten ($f_1$, ..., $f_n$) ermittelt werden, die mittels der Fragmentierungsvorschrift aufgrund desselben Datenobjekts (d) gebildet wurden, konsistent im Sinne der Konsistenzprüfung sind,

   - wobei zur verteilten Abspeicherung des Datenobjekts (d) auf den Servern ($S_1$, ..., $S_n$)

      - das Datenobjekt (d) fragmentiert wird und derart eine Anzahl von Fragmenten ($f_1$, ..., $f_n$) erstellt wird, und
      - wobei Fragment ($f_1$, ..., $f_n$) auf jeweils einen Server ($S_1$, ..., $S_n$) übertragen und auf diesem abgespeichert und zum Abruf zur Verfügung gehalten wird,

   - wobei zum Zweck der Prüfung der Verfügbarkeit und Integrität der auf den Servern ($S_1$, ..., $S_n$) abgespeicherten Fragmente ($f_1$, ..., $f_n$)

      - von einer Auditoreinheit (A) dieselbe Zufallszahl (R) an die Server ($S_1$, ..., $S_n$) übermittelt wird,
      - wobei von den Servern ($S_1$, ..., $S_n$) jeweils modifiziert unter Anwendung der Zufallszahl (R) auf die Daten des jeweiligen Fragments ($f_1$, ..., $f_n$) eine Prüfsumme ($p_1$, ..., $p_n$) erstellt und die Prüfsumme ($p_1$, ..., $p_n$) an die Auditoreinheit (A) übertragen wird, und
      - wobei die Auditoreinheit (A) mittels der Konsistenzprüfung untersucht, ob die einzelnen von den Servern ($S_1$, ..., $S_n$) übermittelten Prüfsummen ($p_1$, ..., $p_n$) konsistent sind und falls dies der Fall ist, die Verfügbarkeit und Integrität der Daten feststellt.

2. Verfahren nach Anspruch 1, **dadurch gekennzeichnet, dass** für den Fall, dass bei der Konsistenzprüfung die Inkonsistenz der übermittelten Prüfsummen ($p_1$, ..., $p_n$) festgestellt wird, untersucht wird, durch welche der Prüfsummen ($p_1$, ..., $p_n$) die Inkonsistenz verursacht wurde und das Fragment ($f_1$, ..., $f_n$), von dem diese Prüfsumme ($p_1$, ..., $p_n$) stammt, als fehlerhaft festgestellt wird.

3. Verfahren nach Anspruch 1 oder 2, **dadurch gekennzeichnet, dass** von der Auditoreinheit (A) ein vorgegebener Teilbereich innerhalb der einzelnen Fragmente ($f_1$, ..., $f_n$) festgelegt wird, der zur Bildung der Prüfsumme ($p_1$, ..., $p_n$) der einzelnen Fragmente ($f_1$, ..., $f_n$) herangezogen wird.

4. Verfahren nach einem der vorangehenden Ansprüche, **dadurch gekennzeichnet, dass** zur Bildung der einzelnen Prüfsummen ($p_1$, ..., $p_n$) jeweils zusätzlich zum Fragment ($f_1$, ..., $f_n$) und zur Zufallszahl (R) eine Zufallsmaske m verwendet wird, wobei die einzelnen in den Servern ($S_1$, ..., $S_n$) verwendeten Zufallsmasken-Fragmente ($m_1$, ..., $m_n$) gemeinsam der Konsistenzprüfung genügen.

5. Verfahren nach Anspruch 4, **dadurch gekennzeichnet, dass** die einzelnen Zufallsmasken-Fragmente ($m_1$, ..., $m_n$) vorab an die einzelnen Server ($S_1$, ..., $S_n$) verteilt werden und in einer vorgegebenen Reihenfolge verwendet werden.

6. Verfahren nach Anspruch 4, **dadurch gekennzeichnet, dass** die Server ($S_1$, ..., $S_n$) die Zufallsmaske m im Zusammenwirken erstellen, wobei keiner der einzelnen Server ($S_1$, ..., $S_n$) Kenntnis über die Zufallsmasken-Fragmente ($m_1$, ..., $m_n$) der anderen Server ($S_1$, ..., $S_n$) erlangt, wobei jeder Server Werte die anderen, insbesondere an jeden anderen, Server übermittelt und diese Werte für die Bildung der Zufallsmasken-Fragmente ($m_1$, ..., $m_n$) herangezogen werden.

7. Verfahren nach einem der vorangehenden Ansprüche, **dadurch gekennzeichnet, dass** für die Bildung der Prüfsumme ($p_1$, ..., $p_n$) das jeweilige Fragment ($f_1$, ... $f_n$) in eine Anzahl von N Fragment-Datenwörtern ($f_{1,1}$, ..., $f_{n,N}$) unterteilt wird, wobei gegebenenfalls eine Zufallsmaske m verwendet wird, die eines oder mehrere Datenwörter umfasst, und dass das Fragment ($f_1$, ..., $f_n$) Datenwortweise gewichtet und akkumuliert werden, wobei die Prüfsummenbildungsvorschrift linear ist hinsichtlich jedes einzelnen Datenworts ($f_{1,1}$, ..., $f_{n,N}$) des Fragments ($f_1$, ... $f_n$) sowie gegebenenfalls hinsichtlich der Zufallsmasken-Fragmente ($m_1$, ..., $m_n$).

8. Verfahren nach Anspruch 7, **dadurch gekennzeichnet, dass** die Prüfsumme ($p_i$) für den i-ten Server ($S_i$) gemäß der folgenden Prüfsummenbildungsvorschrift (P) gebildet wird:

$$p_i = P(f_i) = f_{i,1}*R + f_{i,2}*R^2 + ... [+ m_i]$$

- wobei R die an alle Server ($S_1$, ..., $S_n$) übermittelte Zufallszahl bezeichnet,
- wobei $m_i$ das Zufallsmasken-Fragment des jeweiligen Servers ($S_i$) bezeichnet und gegebenenfalls bei der Bildung der Prüfsumme berücksichtigt wird,
- $f_{i,j}$ das j-te Datenwort des im jeweiligen Server ($S_i$) abgespeicherten Fragments ($f_i$) bezeichnet, und
- wobei insbesondere das Ergebnis der Prüfsumme einer Modulo-Operation mit einem vorgegebenen Wert unterzogen wird.

9. Verfahren nach einem der vorangehenden Ansprüche, **dadurch gekennzeichnet, dass** die Fragmentierung des Datenobjekts (d) vorgenommen wird, indem die vorgegebene Fragmentierungsvorschrift (F) auf jedes Datenwort ($d_1$, ..., $d_N$) des Datenobjekts d separat angewendet wird, wobei für jedes Datenwort jeweils n Fragment-Datenwörter erstellt werden und diese den Fragmenten zugeordnet werden,

- dass die Fragmentierungsvorschrift (F) invertierbar ist und eine Rekonstruktionsvorschrift ($F^{-1}$) vorgegeben wird, wobei für zwei beliebige Datenwörter der folgende Zusammenhang gilt:

$$F^{-1}(F(d_1)+F(d_2)) = d_1+d_2.$$

10. Verfahren nach Anspruch 9, **dadurch gekennzeichnet, dass** die Fragmentierungsvorschrift für dasselbe Datenobjekt abhängig von Zufallswerten jeweils unterschiedliche Fragment-Datenwörter liefert, wobei bei Anwendung der Rekonstruktionsvorschrift ($F^{-1}$) auf die Fragment-Datenwörter jeweils die Datenwörter des Datenobjekts erhalten werden.

11. Verfahren nach einem der vorangehenden Ansprüche, **dadurch gekennzeichnet, dass** zur Rekonstruktion des Datenobjekts (d) aus den Fragmenten ($f_1$, ..., $f_n$) jeweils die einzelnen Fragment-Datenwörter ($f_{1,1}$, ..., $f_{n,N}$), an den Client übertragen werden, wobei diejenigen Fragment-Datenwörter ($f_{1,1}$, ..., $f_{n,N}$), die sich jeweils an derselben Position bezogen auf das jeweilige Fragment befinden und/oder einander zugeordnet sind, jeweils einer Rekonst-

ruktionsvorschrift ($F^{-1}$) unterzogen werden.

12. Verfahren nach einem der vorangehenden Ansprüche, **dadurch gekennzeichnet, dass** die einzelnen von den Servern ($S_1$, ..., $S_n$) erhaltenen Prüfsummen ($p_1$, ..., $p_n$) wie Fragment-Datenwörter der Rekonstruktionsvorschrift ($F^{-1}$) unterzogen werden und die Verfügbarkeit und Integrität der Daten festgestellt wird, wenn auf Grundlage der Prüfsummen ($p_1$, ..., $p_n$) erfolgte Rekonstruktionen von jeweils m Fragmenten jeweils dasselbe Ergebnis liefern.

13. Verfahren nach einem der vorangehenden Ansprüche, **dadurch gekennzeichnet, dass**

- bei Vorliegen von einer Anzahl von n Servern ($S_1$, ..., $S_n$) ein vorgegebener Polynomgrad q von höchstens n-2 vorgegeben wird,
- für jeden der Server ($S_1$, ..., $S_n$) jeweils ein Index i vorgegeben wird, wobei die Indizes der einzelnen Server ($S_1$, ..., $S_n$) untereinander verschieden sind
- bei der Fragmentierungsvorschrift die Fragment-Datenwörter derart gebildet werden,

   - dass ein Polynom vom vorgegebenen Polynomgrad q gebildet wird, das an einer vorgegebenen Stützstelle, insbesondere an der Stelle 0, den Wert des zu fragmentierenden Datenworts ($d_1$, ..., $d_n$) des Datenobjekts (d) aufweist, wobei insbesondere das Polynom im übrigen nach Zufallskriterien ausgewählt wird ODER alle Koeffizienten des Polynoms durch Datenworte ($d_1$, ..., $d_n$) des zu fragmentierenden Datenobjekts (d) gegeben sind, und
   - dass die Datenwörter ($f_{1,1}$, ..., $f_{n,N}$) der Fragmente ($f_1$, ..., $f_n$) durch Auswertung des Polynoms an derjenigen Stützstelle gebildet werden, die dem Index i des jeweiligen Servers ($S_1$, ..., $S_n$) entspricht, an den das Fragment ($f_1$, ..., $f_n$) übermittelt wird,

   - bei der Prüfsummenbildung die einzelnen fragmentierten Datenwörter ($f_{1,1}$, ..., $f_{n,N}$) gewichtet addiert werden, sodass die Prüfsumme ($p_1$, ..., $p_n$) linear von den einzelnen Datenwörtern ($f_{1,1}$, ..., $f_{n,N}$) der Fragmente ($f_1$, ..., $f_n$) abhängt, und
   - bei der Konsistenzprüfung untersucht wird, insbesondere mittels Interpolation, ob ein Polynom vom vorgegebenen Polynomgrad q gebildet werden kann, wenn es bei den jeweiligen Stützstellen, die den Indizes der Server ($S_1$, ..., $S_n$) entsprechen, die vom betreffenden Server ($S_1$, ..., $S_n$) übermittelten Prüfsummen ($p_1$, ..., $p_n$) aufweisen soll.

14. Verfahren nach Anspruch 13, **dadurch gekennzeichnet, dass** bei der Erstellung der Zufallsmasken

   - von jedem Server ein zufälliges Polynom vom vorgegebenen Polynomgrad q erstellt wird und das Polynom an den Stellen, die seinem Index und den Indizes der übrigen Server ($S_1$, ..., $S_n$) befinden, ausgewertet wird,
   - jeder Server ($S_1$, ..., $S_n$) den Wert ($g_{11}$, ..., $g_{nn}$) den er bei Auswertung des Polynoms an seinem Indexwert erhalten hat abspeichert und die anderen Werte ($g_{12}$, ..., $g_{1n}$, $g_{21}$, $g_{23}$, ..., $g_{2n}$, ..., $g_{3(n-1)}$) an die jeweiligen Server ($S_1$, ..., $S_n$) überträgt, deren Index dem Index entspricht, an dem das Polynom ausgewertet wurde,
   - die Server ($S_1$, ..., $S_n$) den bei ihnen abgespeicherten Wert sowie die ihnen von den übrigen Servern ($S_1$, ..., $S_n$) übermittelten Werte akkumulieren, insbesondere addieren, und derart die Zufallsmasken-Fragmente ($m_1$, ..., $m_n$) ermittelt wird.

15. Verfahren nach einem der vorangehenden Ansprüche, **dadurch gekennzeichnet, dass** im Rahmen aller vorgenommenen Rechenoperationen, insbesondere bei der Fragmentierungsvorschrift, der Prüfsummenbildung, der Konsistenzprüfung, und gegebenenfalls der Erstellung der Zufallsmasken,

   a) Datenwörter aus einem endlichen Körper, insbesondere einem Restklassenkörper oder einem Körper mit $2^a$ Elementen, wobei a eine ganze Zahl darstellt, entnommen werden, und
   b) für die Bildung der Summe oder des Produkts oder des multiplikativen oder additiven Inversen zweier Datenwörter die im jeweiligen Körper geltenden Vorschriften für die Summen- oder Produktbildung oder Invertierung herangezogen werden.

**Claims**

1. Method for checking the availability and integrity of a data object (d) which is stored in a distributed manner on a number of servers ($S_1$, ..., $S_n$) connected to one another via a network and has a number N of data words ($d_1$, ..., $d_N$),

- wherein a fragmentation rule is specified by which, for a data object (d), a number n of fragments, in particular with the same number of data words, are created, wherein the fragments $(f_1, ..., f_n)$ are created redundantly such that a number m < n of fragments $(f_1, ..., f_n)$ is sufficient to reconstruct the data object (d),
- that a consistency check is provided which, given the presence of a number fragments $(f_1, ..., f_n)$ greater than m, in particular n, which are produced in particular according to the fragmentation rule (f), checks whether these fragments $(f_1, ..., f_n)$ are consistent with each other and/or originate from the same data object (d),
- wherein a checksum computation rule for computing the checksum $(p_1, ..., p_n)$ is specified, by which a checksum $(p_1, ..., p_n)$ is created from a fragment $(f_1, ..., f_n)$,
- wherein the fragmentation rule, the consistency check and the checksum computation rule are coordinated with one another such that:

- individual fragments $(f_1, ..., f_n)$ created by the fragmentation rule from a data object (d) are consistent with regard to the consistency check (K),
- checksums $(p_1, ..., p_n)$ computed by means of the checksum computation rule, which were ascertained from fragments $(f_1, ..., f_n)$ formed by means of the fragmentation rule based on the same data object (d), are consistent with regard to the consistency check,
- wherein, for distributed storage of the data object (d) on the servers $(S_1, ..., Sn)$
- the data object (d) is fragmented to create a number of fragments $(f_1, ..., f_n)$, and
- wherein fragment $(f_1, ..., f_n)$ is transferred to a respective server $(S_1, ..., S_n)$ and stored and kept available thereon for retrieval,

- wherein, for the purpose of checking the availability and integrity of the fragments $(f_1, ..., f_n)$ stored on the servers $(S_1, ..., S_n)$

- the same random number (R) is transmitted from an auditor unit (A) to the servers $(S_1, ..., S_n)$,
- wherein a checksum $(p_1, ..., p_n)$ is created, in each case modified, by the servers $(S_1, ..., S_n)$ by applying the random number (R) to the data of the respective fragment $(f_1, ..., f_n)$, and the checksum $(p_1, ..., p_n)$ is transmitted to the auditor unit (A), and
- wherein the auditor unit (A) examines, by means of the consistency check, whether the individual checksums $(p_1, ..., p_n)$ transmitted by the servers $(S_1, ..., S_n)$ are consistent and, if this is the case, establishes the availability and integrity of the data.

2. Method according to claim 1, **characterised in that**, in the event that the consistency check establishes that the transmitted checksums $(p_1, ..., p_n)$ are inconsistent, it is examined which of the checksums $(p_1, ..., p_n)$ caused the inconsistency, and the fragment $(f_1, ..., f_n)$ from which this checksum $(p_1, ..., p_n)$ originates is found to be incorrect.

3. Method according to claim 1 or 2, **characterised in that** the auditor unit (A) defines a predetermined subset within the individual fragments $(f_1, ..., f_n)$ which is used to compute the checksum $(p_1, ..., p_n)$ of the individual fragments $(f_1, ..., f_n)$.

4. Method according to any of the preceding claims, **characterised in that**, to compute the individual checksums $(p_1, ..., p_n)$, in each case, in addition to the fragment $(f_1, ..., f_n)$ and the random number (R), a random mask m is used, wherein the individual random mask fragments $(m_1, ..., m_n)$ used in the servers $(S_1, ..., S_n)$ jointly satisfy the consistency check.

5. Method according to claim 4, **characterised in that** the individual random mask fragments $(m_1, ..., m_n)$ are distributed in advance to the individual servers $(S_1, ..., S_n)$ and are used in a predetermined order.

6. Method according to claim 4, **characterised in that** the servers $(S_1, ..., S_n)$ create the random mask m collaboratively, wherein none of the individual servers $(S_1, ..., S_n)$ gains knowledge about the random mask fragments $(m_1, ..., m_n)$ of the other servers $(S_1, ..., S_n)$, wherein each server transmits values to the other, in particular to each of the other, servers, and these values are used for forming the random mask fragments $(m_1, ..., m_n)$.

7. Method according to any of the preceding claims, **characterised in that**, for computing the checksum $(pi, ..., p_n)$, the respective fragment $(f_1, ..., f_n)$ is divided into a number of N fragment data words $(f_{1,1}, ..., f_{nN})$, wherein a random mask m is optionally used which comprises one or more data words, and **in that** the fragment $(f_1, ..., f_n)$ are weighted and accumulated data word by data word, wherein the checksum computation rule is linear with respect to each individual data word $(f_{1,1}, ..., f_{nN})$ of the fragment $(f_1, ..., f_n)$ and optionally with respect to the random mask fragments

$(m_1, ..., m_n)$.

8. Method according to claim 7, **characterised in that** the checksum $(p_i)$ for the i-th server $(S_i)$ is computed according to the following checksum computation rule (P):

$$p_i = P(f_i) = f_{i,1}*R + f_{i,2}*R^2 + ... [+ m_i],$$

   - wherein R denotes the random number transmitted to all servers $(S_1, ..., S_n)$;
   - wherein $m_i$ denotes the random mask fragment of the respective serve $(S_i)$ and is optionally taken into account in computing the checksum;
   - $f_{i,j}$ denotes the j-th data word of the fragment $(f_i)$ stored in the respective server $(S_i)$, and
   - wherein, in particular, the result of the checksum is subjected to a modulo operation with a predetermined value.

9. Method according to any of the preceding claims, **characterised in that** the fragmentation of the data object (d) is carried out by applying the predetermined fragmentation rule (F) separately to each data word $(d_1, ..., d_N)$ of the data object d, wherein for each data word, n fragment data words are created and are associated with the fragments,

   - **in that** the fragmentation rule (F) is invertible and a reconstruction rule $(F^{-1})$ is specified, wherein the following relationship applies to any two data words:

$$F^{-1}(F(d_1)+ F(d_2)) = d_1 +d_2.$$

10. Method according to claim 9, **characterised in that** the fragmentation rule delivers different fragment data words for the same data object depending on random values, wherein the data words of the data object are obtained when the reconstruction rule $(F^{-1})$ is applied to the fragment data words.

11. Method according to any of the preceding claims, **characterised in that**, to reconstruct the data object (d) from the fragments $(f_1, ..., f_n)$, the individual fragment data words $(f_{1,1}, ..., f_{nN})$ are respectively transmitted to the client, wherein the fragment data words $(f_{1,1}, ..., f_{nN})$ that are respectively located at the same position relative to the respective fragment and/or are associated with one another are each subjected to a reconstruction rule $(F^{-1})$.

12. Method according to any of the preceding claims, **characterised in that** the individual checksums $(p_1, ..., p_n)$ obtained from the servers $(S_1, ..., S_n)$ are subjected to the reconstruction rule $(F^{-1})$ like fragment data words and the availability and integrity of the data are established if reconstructions of m fragments which are performed based on the checksums $(p_1, ..., p_n)$ all yield the same result.

13. Method according to any of the preceding claims, **characterised in that**,

   - given the presence a number of n servers $(S_1, ..., S_n)$, a predetermined polynomial degree q of at most n-2 is specified,
   - for each of the servers $(S_1, ..., S_n)$, an index i is specified, wherein the indices of the individual servers $(S_1, ..., S_n)$ are different from each other
   - in the fragmentation rule, the fragment data words are formed in such a way

      - that a polynomial of the predetermined polynomial degree q is formed, which, at a predetermined node, in particular at the point 0, has the value of the data word $(d_1, ..., d_n)$ of the data object (d) that is to be fragmented, wherein in particular the polynomial is otherwise selected according to random criteria OR all coefficients of the polynomial are represented by data words $(d_1, ..., d_n)$ of the data object (d) that is to be fragmented, and
      - that the data words $(f_{1,1}, ..., f_{nN})$ of the fragments $(f_1, ..., f_n)$ are formed by evaluating the polynomial at the node that corresponds to the index i of the respective server $(S_1, ..., S_n)$ to which the fragment $(f_1, ..., f_n)$ is transmitted,
      - in the checksum computation, the individual fragmented data words $(f_{1,1}, ..., f_{nN})$ are added in a weighted manner so that the checksum $(p_1, ..., p_n)$ is a linear function of the individual data words $(f_{1,1}, ..., f_{nN})$ of the fragments $(f_1, ..., f_n)$, and

- it is examined in the consistency check, in particular by means of interpolation, whether a polynomial of the predetermined polynomial degree q can be formed if, at the respective nodes that correspond to the indices of the servers ($S_1$, ..., $S_n$), said polynomial should have the checksums ($p_1$, ..., $p_n$) transmitted by the relevant server ($S_1$, ..., $S_n$).

14. Method according to claim 13, **characterised in that**, in the creation of the random masks

- each server creates a random polynomial of the predetermined polynomial degree q and the polynomial is evaluated at the points of its index and the indices of the other servers ($S_1$, ..., $S_n$);
- each server ($S_1$, ..., $S_n$) stores the value ($g_{11}$, ..., $g_{nn}$) which it obtained when evaluating the polynomial at its index value, and transmits the other values ($g_{12}$, ..., $g_{1n}$, $g_{21}$, $g_{23}$, ..., $g_{2n}$, ..., $g_{3(n-1)}$) to the respective servers ($S_1$, ..., $S_n$) that have an index that corresponds to the index at which the polynomial was evaluated,
- the servers ($S_1$, ..., $S_n$) accumulate, in particular add, the value stored thereon and the values transmitted to them by the other servers ($S_1$, ..., $S_n$), and the random mask fragments ($m_1$, ..., $m_n$) is thus determined.

15. Method according to any of the preceding claims, **characterised in that**, in all computational operations carried out, in particular in the fragmentation rule, the checksum computation, the consistency check, and optionally the creation of random masks,

a) data words are taken from a finite field, in particular from a residue class field or a field with $2^a$ elements, where a is an integer, and
b) rules used for computing the sum or the product or the multiplicative or additive inverse of two data words are the rules applicable in the respective field for computing sums or products or for inversion.

## Revendications

1. Procédé de vérification de la disponibilité et de l'intégrité d'un objet de données (d) enregistré de manière répartie sur un nombre de serveurs ($S_1$, ..., $S_n$), connectés les uns aux autres par l'intermédiaire d'un réseau et comportant un nombre N de mots de données ($d_1$, ..., $d_N$),

- dans lequel une règle de fragmentation est spécifiée, avec laquelle un nombre n de fragments, avec en particulier un même nombre de mots de données, sont établis pour un objet de données (d), dans lequel les fragments ($f_1$, ... $f_n$) sont établis de manière redondante de sorte qu'un nombre m < n de fragments ($f_1$, ..., $f_n$) suffit pour une reconstruction de l'objet de données (d),
- qu'une vérification de cohérence pour mise à disposition est prévue qui, s'il existe un nombre supérieur à m, en particulier n, de fragments ($f_1$, ..., $f_n$) produits notamment après la règle de fragmentation (f), vérifie ensuite si ces fragments ($f_1$, ..., $f_n$) sont cohérents entre eux et/ou proviennent du même objet de données (d),
- dans lequel une règle de formation de somme de vérification pour former la somme de vérification ($p_1$, ..., $p_n$) est spécifiée, avec laquelle une somme de vérification ($p_1$, ..., $p_n$) est créée à partir d'un fragment ($f_1$, ..., $f_n$),
- dans lequel la règle de fragmentation, la vérification de cohérence et la règle de formation de somme de vérification sont coordonnées entre elles de telle sorte que

- des fragments individuels ($f_1$, ..., $f_n$) créés avec la règle de fragmentation à partir d'un objet de données (d) sont cohérents au sens de la vérification de cohérence (K),
- les sommes de vérification ($p_1$, ..., $p_n$) formées à l'aide de la règle de formation de somme de vérification, qui sont déterminées à partir de fragments ($f_1$, ..., $f_n$), qui ont été créés à l'aide de la règle de fragmentation sur la base du même objet de données (d), sont cohérentes dans le sens de la vérification de cohérence,

- dans lequel pour le stockage réparti de l'objet de données (d) sur les serveurs ($S_1$, ..., $S_n$)

- l'objet de données (d) est fragmenté et par conséquent un nombre de fragments ($f_1$, ..., $f_n$) est établi, et
- dans lequel fragment ($f_1$, ..., $f_n$) est transmis à un serveur ($S_1$, ..., $S_n$) respectif et stocké sur celui et étant mis à disposition pour être récupéré,

- dans lequel pour la vérification de la disponibilité et de l'intégrité des fragments ($f_1$, ..., $f_n$) stockés sur les serveurs ($S_1$, ..., $S_n$),

- une unité auditeur (A) transmet le même nombre aléatoire (R) aux serveurs (S1, ..., Sn),
- dans lequel les serveurs ($S_1$, ..., $S_n$) établissent chacun une somme de vérification ($p_1$, ..., $p_n$) modifiée en appliquant le nombre aléatoire (R) aux données du fragment ($f_1$, ..., fn) respectif, et la somme de vérification ($p_1$, ..., $p_n$) est transmise à l'unité auditeur (A) et
- dans lequel l'unité auditeur (A) examine, au moyen de la vérification de cohérence, si les sommes de vérification ($p_1$, ..., $p_n$) individuelles transmises par les serveurs ($S_1$, ..., $S_n$) sont cohérentes, et si tel est le cas, constate la disponibilité et l'intégrité des données.

2. Procédé selon la revendication 1, **caractérisé par**, dans le cas où l'incohérence des sommes de vérification transmises ($p_1$, ..., $p_n$) est déterminée lors de la vérification de cohérence, un examen de celle des sommes de vérification ($p_1$, ..., $p_n$) par laquelle l'incohérence a été provoquée et le fragment ($f_1$, ..., $f_n$) d'où provient cette somme de vérification ($p_1$, ..., $p_n$) est déterminé comme étant défectueux.

3. Procédé selon la revendication 1 ou 2, **caractérisé en ce que** l'unité auditeur (A) détermine une zone partielle prédéterminée à l'intérieur des fragments individuels ($f_1$, ..., $f_n$), qui est utilisée pour former la somme de vérification ($p_1$, ..., $p_n$) des fragments individuels ($f_1$, ..., $f_n$).

4. Procédé selon l'une quelconque des revendications précédentes, **caractérisé en ce qu'**un masque aléatoire m est utilisé en plus du fragment ($f_1$, ..., $f_n$) et du nombre aléatoire (R) pour former les sommes de vérification individuelles ($p_1$, ..., $p_n$), dans lequel les fragments de masques aléatoires individuels ($m_1$, ..., $m_n$) utilisés dans les serveurs ($S_1$, ..., $S_n$) satisfont ensemble à la vérification de cohérence.

5. Procédé selon la revendication 4, **caractérisé en ce que** les fragments de masques aléatoires individuels ($m_1$, ..., $m_n$) sont préalablement répartis au niveau des serveurs individuels ($S_1$, ..., $S_n$) et utilisés dans un ordre prédéterminé.

6. Procédé selon la revendication 4, **caractérisé en ce que** les serveurs ($S_1$, ..., $S_n$) créent en coopération le masque aléatoire m, dans lequel aucun des serveurs individuels ($S_1$, ..., $S_n$) n'obtient connaissance des fragments de masques aléatoires ($m_1$, ..., $m_n$) des autres serveurs ($S_1$, ..., $S_n$), dans lequel chaque serveur transmet des valeurs aux autres serveurs, notamment à chaque autre, et ces valeurs sont utilisées pour la formation des fragments de masques aléatoires ($m_1$, ..., $m_n$).

7. Procédé selon l'une quelconque des revendications précédentes, **caractérisé en ce que** pour la formation de la somme de vérification ($p_1$, ..., $p_n$), le fragment respectif ($f_1$, ..., $f_n$) en un nombre de N fragments-mots de données ($f_{1,1}$, ..., $f_{n,N}$), dans lequel facultativement un masque aléatoire m est utilisé, qui comprend un ou plusieurs mots de données, et
**en ce que** le fragment ($f_1$, ..., $f_n$) sont pondérés et accumulés à la manière d'un mot de données, dans lequel la règle de formation de somme de vérification est linéaire par rapport à chaque mot de données individuel ($f_{1,1}$, ..., $f_{n,N}$) du fragment ($f_1$, ..., fn) ainsi que le cas échéant par rapport aux fragments de masques aléatoires ($m_1$, ..., $m_n$).

8. Procédé selon la revendication 7, **caractérisé en ce que** la somme de vérification ($p_i$) pour le i-ème serveur ($S_i$) est formée conformément à la règle de formation de somme de vérification (P) suivante :

$$p_i = P(f_i) = f_{i,1}*R + f_{i,2}*R^2 + ... [+ m_i]$$

- dans lequel R désigne le nombre aléatoire transmis à tous les serveurs ($S_1$, ..., $S_n$),
- dans lequel $m_i$ désigne le fragment de masques aléatoires du serveur respectif ($S_i$) et est facultativement pris en compte lors de la formation de la somme de vérification,
- $f_{i,j}$ désigne le j-ième mot de données du fragment ($f_i$) stocké dans le serveur respectif ($S_i$), et
- dans lequel le résultat de la somme de vérification est notamment soumis à une opération modulo avec une valeur prédéterminée.

9. Procédé selon l'une quelconque des revendications précédentes, **caractérisé en ce que** la fragmentation de l'objet de données (d) est effectuée en appliquant la règle de fragmentation prédéterminée (F) à chaque mot de données ($d_1$, ..., $d_N$) de l'objet de données d séparé, dans lequel n mots de données de fragment sont créés pour chaque mot de données et ceux-ci sont attribués aux fragments,

- **en ce que** la règle de fragmentation (F) peut être inversée et **en ce qu'**une règle de reconstruction (F$^{-1}$) est spécifiée, dans lequel la relation suivante est valable pour deux mots de données quelconques :

$$F^{-1}(F(d_1) + F(d_2)) = d_1 + d_2.$$

10. Procédé selon la revendication 9, **caractérisé en ce que** la règle de fragmentation pour le même objet de données délivre différents mots de données de fragment en fonction de valeurs aléatoires, dans lequel les mots de données de l'objet de données sont obtenus lorsque la règle de reconstruction (F$^{-1}$) est appliquée aux mots de données de fragment.

11. Procédé selon l'une quelconque des revendications précédentes, **caractérisé en ce que** pour la reconstruction de l'objet de données (d) à partir des fragments (f$_1$, ..., f$_n$) chacun des mots de données de fragment individuels (f$_{1,1}$, ..., f$_{n,N}$) sont transmis au client, dans lequel les mots de données de fragment (f$_{1,1}$, ..., f$_{n,N}$) qui sont chacun dans la même position par rapport au fragment respectif et/ou qui sont attribués les uns aux autres ont chacun une règle de reconstruction (F$^{-1}$).

12. Procédé selon l'une quelconque des revendications précédentes, **caractérisé en ce que** les sommes de vérification individuelles (p$_1$, ..., p$_n$) reçues des serveurs (S$_1$, ..., S$_n$) sont soumises à la règle de reconstruction (F$^{-1}$) comme des mots de données de fragment et la disponibilité et l'intégrité des données sont déterminées lorsque, sur la base des sommes de vérification (p$_1$, ..., p$_n$), les reconstructions de m fragments respectifs donnent chacune le même résultat.

13. Procédé selon l'une quelconque des revendications précédentes, **caractérisé en ce que**

- s'il existe un nombre de n serveurs (S$_1$, ..., S$_n$), un degré polynomial prédéterminé q d'au plus n-2 est spécifié,
- un indice i est spécifié pour chacun des serveurs (S$_1$, ..., S$_n$), dans lequel les indices des serveurs individuels (S$_1$, ..., S$_n$) sont différents les uns des autres
- via la règle de fragmentation, les mots de données de fragment sont formés de telle manière

- qu'un polynôme du degré de polynôme prédéterminé q est formé, qui présente la valeur du mot de données (d$_1$, ..., d$_n$) de l'objet de données (d) à fragmenter en un point de support prédéterminé, en particulier au point 0, dans lequel en particulier le polynôme est en outre sélectionné selon des critères aléatoires OU tous les coefficients du polynôme sont donnés par des mots de données (d$_1$, ..., d$_n$) de l'objet de données (d) à fragmenter, et
- que les mots de données (f$_{1,1}$, ..., f$_{n,N}$) des fragments (f$_1$, ..., f$_n$) sont formés en évaluant le polynôme au niveau du point de support qui correspond à l'indice i du serveur respectif (S$_1$, ..., S$_n$) auquel le fragment (f$_1$, ..., f$_n$) est transmis,

- les mots de données fragmentés individuels (f$_{1,1}$, ..., f$_{n,N}$) sont additionnés ensemble de manière pondérée par la formation de somme de vérification, de sorte que la somme de vérification (p$_1$, ..., p$_n$) dépend linéairement des mots de données individuels (f$_{1,1}$, ..., f$_{n,N}$) des fragments (f$_1$, ..., f$_n$), et
- lors de la vérification de cohérence, notamment par interpolation, intervient un examen qu'un polynôme du degré de polynôme spécifié q peut être formé ou non, lorsque les points de support respectifs, qui correspondent aux indices des serveurs (S$_1$, ..., S$_n$), doivent présenter les sommes de vérification (p$_1$, ..., p$_n$) transmises aux serveurs concernés (S$_1$, ..., S$_n$).

14. Procédé selon la revendication 13, **caractérisé en ce que** lors de la création des masques aléatoires

- un polynôme aléatoire du degré de polynôme spécifié q est créé par chaque serveur, et le polynôme est évalué aux positions où se trouvent son index et les indices des autres serveurs (S$_1$, ..., S$_n$),
- chaque serveur (S$_1$, ..., S$_n$) stocke la valeur (g$_{11}$, ..., g$_{nn}$) qu'il a reçue lors de l'évaluation du polynôme à sa valeur d'index et transmet les autres valeurs (g$_{12}$, ..., g$_{1n}$, g$_{21}$, g$_{23}$, ..., g$_{2n}$, ..., g$_{3(n-1)}$) au serveur respectif (S$_1$, ..., S$_n$), dont l'indice correspond à l'indice par rapport auquel le polynôme a été évalué,
- les serveurs (S$_1$, ..., S$_n$) accumulent, notamment ajoutent, la valeur stockée par ceux-ci et les valeurs qui leur sont transmises par les autres serveurs (S$_1$, ..., S$_n$), et de cette façon les fragments de masques aléatoires (m$_1$, ..., m$_n$) est déterminé.

**15.** Procédé selon l'une quelconque des revendications précédentes, **caractérisé en ce que** dans le cadre de toutes les opérations arithmétiques effectuées, notamment dans la règle de fragmentation, la formation de somme de vérification, la vérification de cohérence, et facultativement la création des masques aléatoires,

a) les mots de données sont tirés d'un champ fini, en particulier un corps de classe restant ou d'un corps avec des éléments $2^a$, dans lequel a représente un entier, et

b) pour la formation de la somme ou du produit ou l'inverse multiplicatif ou additif de deux mots de données, les règles applicables dans chaque corps pour la formation de la somme ou du produit ou de l'inverse sont utilisées.

Fig. 1

Fig. 2

Fig. 3

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2011157708 A1